# EUROPEAN PATENT APPLICATION

(11) **EP 2 842 857 A1**
(43) Date of publication of application: **04.03.2015**
(21) Application number: 14182435.9
(22) Date of filing: 27.08.2014
(51) Int. Cl.: B62M 6/50, B62M 6/55

(54) **Treading force sensing mechanism for electric-assisted bicycle**

(30) Priority: 29.08.2013 TW 102216256 U
(71) Applicant: J.D Components Co., Ltd., Shou Shui Hsiang, Chang Hua Hsien (TW)
(72) Inventor: Hsu, Yuan-Fang, 300 Hsinchu City (TW)
(74) Representative: Straus, Alexander

(57) **Abstract**

A treading force sensing mechanism (10) for an electric-assisted bicycle includes a crankshaft (20), a mid-mounted motor (30), and a strain gauge (40). The mid-mounted motor (30) is disposed at the crankshaft (20) and adapted to provide a source of an auxiliary force. The strain gauge (40) is attached to a casing (32) of the mid-mounted motor (30). The strain sensing direction of the strain gauge (40) is parallel to the axial direction (A) of the crankshaft (20) and thus is capable of sensing strain generated by the casing (32) under treading forces (FL), (FR) exerted by a cyclist, such that magnitude of the treading forces (FL), (FR) is estimated according to the strain sensed with the strain gauge (40).

## Description

### BACKGROUND OF THE INVENTION

### 1. Technical Field

The present invention relates to electric-assisted bicycles, and more particularly, to a treading force sensing mechanism for an electric-assisted bicycle.

### 2. Description of Related Art

Conventional electric-assisted bicycles are each equipped with a treading force sensing mechanism for sensing a treading force exerted by a cyclist. The treading force sensing mechanism operates in conjunction with an auxiliary force ratio mode configured by its system to determine the required power to be supplied by a motor of the electric-assisted bicycle such that the cyclist can ride the electric-assisted bicycle in a labor-saving manner.

The treading force sensing mechanism is conventionally mounted on pedals, driving gears, or a rear wheel spindle. There are difficulties in installing the conventional treading force sensing mechanism in conjunction with the other accessories. Furthermore, as regards the sensing of the rotation speed of a driving gear, the driving gear keeps rotating even though the cyclist does not exert any treading force; as a result, if the cyclist stops treading in response to an accident, an auxiliary force generated by the motor will not stop immediately, thereby posing a threat to the cyclist. In view of this, there is still room for improvement of the prior art.

### SUMMARY OF THE INVENTION

It is an objective of the present invention to provide a treading force sensing mechanism for an electric-assisted bicycle, wherein the treading force sensing mechanism is easy to install and conducive to enhancement of cycling safety and sensing precision.

In order to achieve the above and other objectives, a treading force sensing mechanism of the present invention comprises a crankshaft, a mid-mounted motor, and a strain gauge. The mid-mounted motor is disposed at the crankshaft and has a casing and an auxiliary force generating unit disposed in the casing. The strain gauge is attached to the casing. Hence, the treading force sensing mechanism is easy to install. Furthermore, the strain sensing direction of the strain gauge is parallel to the axial direction of the crankshaft, such that the strain gauge precisely senses the strain generated from the casing under the treading force.

In the embodiment of the present invention, an inner annular portion, an outer annular portion, and a bearing support portion are disposed at an end of the casing, the inner annular portion enclosing the crankshaft coaxially, the outer annular portion enclosing the inner annular portion coaxially, and the bearing support portion extending outward from an end of the inner annular portion and in the axial direction of the crankshaft, wherein the strain gauge is attached to a lateral surface of the inner annular portion.

In the embodiment of the present invention, the strain gauges exhibit vertical symmetry about the crankshaft, so as to further enhance sensing precision.

### BRIEF DESCRIPTION OF THE SEVERAL VIEWS OF THE DRAWINGS

FIG. 1 is a cross-sectional view of the present invention;
FIG. 2 is a lateral view of the present invention; and
FIG. 3 is a block diagram of the present invention.

### DETAILED DESCRIPTION OF THE EMBODIMENT OF THE INVENTION

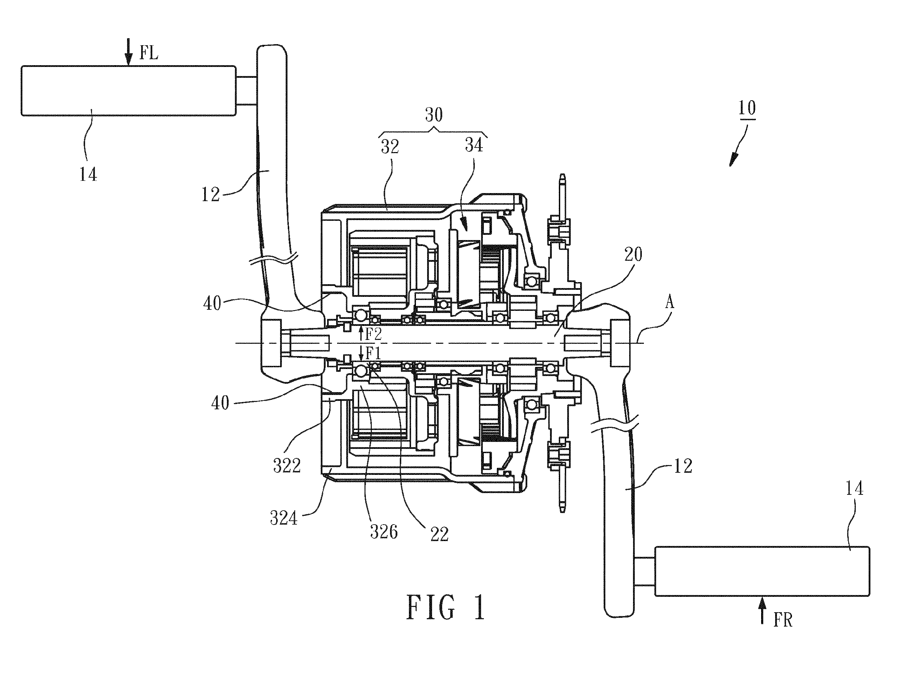

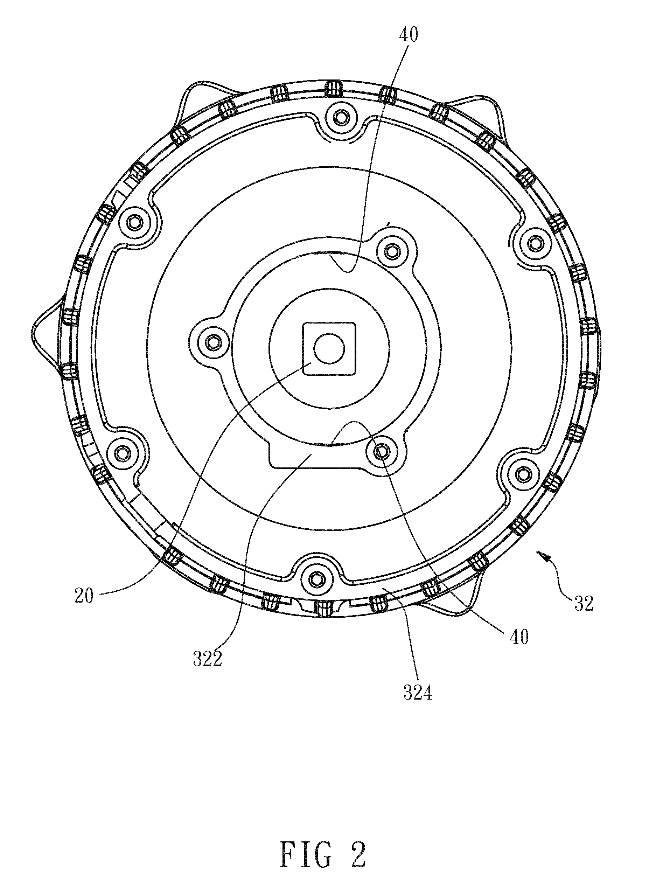

Referring to FIGs. 1, 2, a treading force sensing mechanism 10 of the present invention comprises a crankshaft 20, a mid-mounted motor 30, and two strain gauges 40.

Each of the two ends of the crankshaft 20 is connected to a crank 12. The cranks 12 each have one end connected to a pedal 14, such that the crankshaft 20 rotates in synchrony with the two cranks 12 when two pedals 14 rotate synchronously under a treading force exerted by a cyclist.

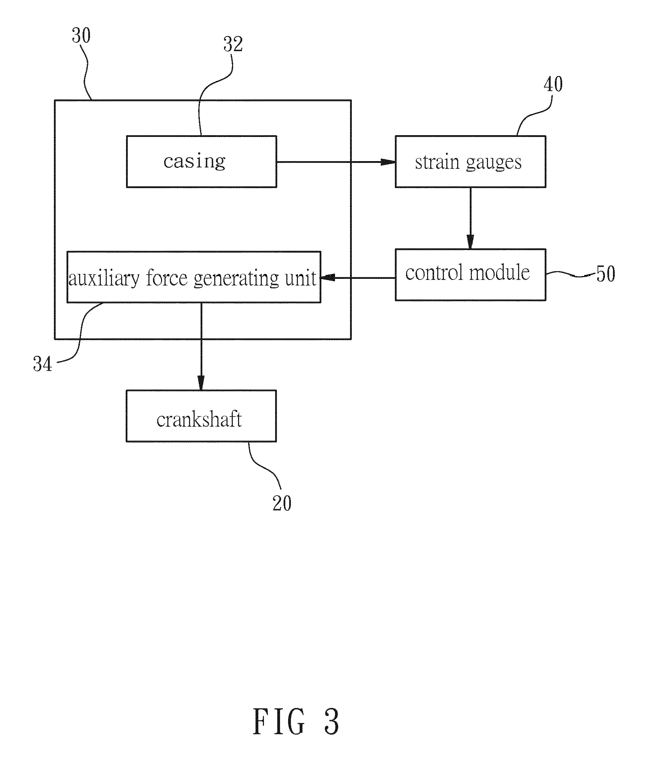

The mid-mounted motor 30 is disposed at the crankshaft 20 and has a casing 32. An inner annular portion 322, an outer annular portion 324, and a bearing support portion 326 are disposed at one end of the casing 32. The inner annular portion 322 encloses the crankshaft 20 coaxially. The outer annular portion 324 encloses the inner annular portion 322 coaxially. The bearing support portion 326 extends outward from one end of the inner annular portion 322 and in axial direction A of the crankshaft 20 to support a bearing 22 fitted to the crankshaft 20. The mid-mounted motor 30 further has an auxiliary force generating unit 34 disposed in the casing 32. The auxiliary force generating unit 34 is electrically connected to a control module 50 (as shown in FIG. 3), such that the auxiliary force generating unit 34 is controlled by the control module 50 to thereby exert an auxiliary force on the crankshaft 20 or stop exerting the auxiliary force on the crankshaft 20. The fine structures and operating principles of the auxiliary force generating unit 34 are not described herein for the sake of brevity, because the mid-mounted motor 30 is not an essential technical feature of the present invention but is regarded as a conventional power mechanism in this technical field.

The two strain gauges 40 are attached to a lateral surface (i.e., the inner surface) of the inner annular portion 322 of the casing 32, and the lateral surface of the inner annular portion 322 faces the crankshaft 20. The two strain gauges 40 exhibit vertical symmetry about the crankshaft 20. Each of the strain gauges 40 has a strain sensing direction parallel to an axial direction A of the crankshaft 20. The treading force sensing mechanism 10 will work, provided that the treading force sensing mechanism 10 has at least one said strain gauge 40, though the strain gauges 40 are preferably in the number of two.

Therefore, as soon as the cyclist begins to tread on left and right pedals 14 and exerts treading force FL, FR on the left and right pedals 14, such that applied forces F1, F2 are exerted on the bearing 22, respectively. The inner annular portion 322 of the casing 32 deforms slightly under the applied forces F1, F2, and thus the strain gauges 40 each instantly sense the magnitude of the strain of the casing 32 and send a sensing signal to the control module 50, thereby causing the control module 50 to calculate the magnitude of the treading forces FL, FR.

In conclusion, the treading force sensing mechanism 10 of the present invention is characterized in that the strain gauges 40 are mounted on the casing 32. Unlike its conventional counterparts, the treading force sensing mechanism 10 of the present invention is installed regardless of the other accessories and thus is easy to install. Furthermore, the strain gauges 40 are installed in a manner that the strain of the casing 32 can be sensed accurately, such that the control module 50 can estimate the magnitude of the left and right treading forces FL, FR, and in consequence the control module 50 controls the auxiliary force generating unit 34 of the mid-mounted motor 30 in exerting an auxiliary force on the crankshaft 20 or stopping exerting the auxiliary force according to the magnitude of the treading forces FL, FR, thereby enhancing cycling safety.

## Claims

1. A treading force sensing mechanism (10) for an electric-assisted bicycle, comprising:
a crankshaft (20);
a mid-mounted motor (30) disposed at the crankshaft (20) and having a casing (32) and an auxiliary force generating unit (34) disposed in the casing (32); and
at least a strain gauge (40) attached to the casing (32) of the mid-mounted motor (30) and having a strain sensing direction parallel to an axial direction (A) of the crankshaft (20).

2. The treading force sensing mechanism (10) of claim 1, wherein an inner annular portion (322), an outer annular portion (324), and a bearing support portion (326) are disposed at an end of the casing (32), the inner annular portion (322) enclosing the crankshaft (20) coaxially, the outer annular portion (324) enclosing the inner annular portion (322) coaxially, and the bearing support portion (326) extending outward from an end of the inner annular portion (322) and in the axial direction (A) of the crankshaft (20), wherein the strain gauge (40) is attached to a lateral surface of the inner annular portion (322), and the lateral surface of the inner annular portion (322) faces the crankshaft (20).

3. The treading force sensing mechanism (10) of claim 1 or 2, wherein the strain gauges (40) are in the number of two, and the two strain gauges (40) exhibit vertical symmetry about the crankshaft (20).
